# EUROPEAN PATENT APPLICATION

(11) **EP 4 837 483 A1**
(43) Date of publication of application: **11.11.2026**
(21) Application number: 24915161.4
(22) Date of filing: 26.12.2024
(51) Int. Cl.: A47L 11/24, A47L 11/40, A47L 11/00, G01S 7/481, G01S 17/88

(54) **CLEANING ROBOT AND CLEANING SYSTEM**

(30) Priority: 05.01.2024 CN 202420039240 U
(71) Applicant: Beijing Roborock Technology Co., Ltd., Beijing 102206 (CN)
(72) Inventor: LIANG, Bing, Beijing 102206 (CN); ZHANG, Wei, Beijing 102206 (CN); LIU, Bo, Beijing 102206 (CN); WU, Jiang, Beijing 102206 (CN); GAO, Chao, Beijing 102206 (CN); ZHANG, Lei, Beijing 102206 (CN)
(74) Representative: Lorenz Seidler Gossel Part. mbB
(86) International application number: PCT/CN2024/142578
(87) International publication number: WO 2025/145946

(57) **Abstract**

Disclosed in the present application are a cleaning robot and a cleaning system. The cleaning robot comprises: an apparatus main body; and a time-of-flight laser radar, which is arranged on the apparatus main body and comprises a transmitting unit and a receiving unit, wherein the transmitting unit comprises a laser transmitter and a transmitting lens, which are sequentially arranged; the receiving unit comprises a receiver and a receiving lens, which are sequentially arranged; and the optical axis of the transmitting lens and the optical axis of the receiving lens are coaxially arranged.

## Description

The present disclosure claims priority to Chinese Patent Application No. 202420039240.1, filed with the China National Intellectual Property Administration on January 5, 2024, and entitled "CLEANING ROBOT AND CLEANING SYSTEM", which is incorporated herein by reference in its entirety.

### TECHNICAL FIELD

The present disclosure relates to the technical field of smart homes, and in particular, to a cleaning robot and a cleaning system.

### BACKGROUND ART

With the continuous development of science and technology and the ongoing improvement of people's living standards, cleaning robots, such as intelligent sweeping robots, have increasingly become part of our daily lives. As the integration level and functions of sweeping robots increase, the number of components thereof also grows. Meanwhile, the overall design of the cleaning robot needs to meet the requirements for a compact structure and a small volume. Accordingly, the requirements for the physical dimensions of individual components are relatively high.

At present, cleaning robots are usually equipped with a lidar to detect their surrounding environment. The lidar serves as an important sensor for cleaning robots and plays a significant role in operating conditions such as mapping, navigation, and obstacle avoidance. In addition, the physical dimensions of the lidar may also affect the volume of the cleaning robot.

### SUMMARY OF THE INVENTION

A series of simplified concepts is introduced in the SUMMARY section, which will be further described in detail in the DETAILED DESCRIPTION section below. This section of the present disclosure is not intended to attempt to define key features and essential technical features of the claimed technical solutions, nor is it intended to attempt to delineate the protection scope of the claimed technical solutions.

According to one embodiment of a first aspect of the present disclosure, a cleaning robot is provided. The cleaning robot includes: a device main body and a time-of-flight lidar disposed on the device main body. The time-of-flight lidar includes an emission unit and a receiving unit. The emission unit includes a laser emitter and an emission lens disposed in sequence, and the receiving unit includes a receiver and a receiving lens disposed in sequence. An optical axis of the emission lens and an optical axis of the receiving lens are coaxially disposed.

In a feasible embodiment, the time-of-flight lidar further includes: a reflecting mirror. The reflecting mirror is obliquely disposed above the emission lens and the receiving lens. The reflecting mirror is configured to rotate with the optical axis of the emission lens and/or the optical axis of the receiving lens as a rotation axis. Light emitted by the laser emitter passes through the emission lens, is redirected by the reflecting mirror, and is then projected; and returned received light is redirected by the reflecting mirror, passes through the receiving lens, and is then received by the receiver.

In a feasible embodiment, an inclination angle of the reflecting mirror relative to a horizontal line is at least 45° and does not exceed 47°.

In a feasible embodiment, the time-of-flight lidar further includes: a fixed base, the fixed base being connected to the device main body, and the emission unit and the receiving unit being mounted on the fixed base; a rotating base, the rotating base being rotatably connected above the fixed base, and the reflecting mirror being mounted on the rotating base; and a driving part mounted on the fixed base and/or the device main body and connected to the rotating base, the driving part being configured to drive the rotating base to rotate relative to the fixed base.

In a feasible embodiment, the time-of-flight lidar further includes: a main circuit. The main circuit is mounted on the fixed base. The emission unit further includes an emission circuit electrically connected to the laser emitter, the receiving unit further includes a receiving circuit electrically connected to the receiver, and the main circuit is electrically connected to the emission circuit and the receiving circuit.

In a feasible embodiment, the laser emitter is horizontally arranged, and the receiver is horizontally arranged. The laser emitter is arranged above the emission circuit, the receiver is arranged above the receiving circuit, and the main circuit is located below the emission circuit and the receiving circuit.

In a feasible embodiment, the time-of-flight lidar further includes: a rotating member, the rotating base and the fixed base defining a mounting chamber in an enclosing manner, the fixed base being provided with an annular mounting groove located within the mounting chamber, the emission unit and the receiving unit being mounted inside the mounting groove, and the rotating member being sleeved on an outer side of the mounting groove and connected to the rotating base; and a locking member, the locking member being sleeved on the outer side of the mounting groove and located above the rotating member, the emission unit further including a mounting barrel, and the locking member being connected to an outer wall of the mounting groove to lock the rotating member on the mounting barrel.

In a feasible embodiment, the outer wall of the mounting groove is provided with a first step, and an outer wall of an end part, facing the rotating base, of the mounting groove is provided with a threaded structure; and the locking member is a locking nut, the rotating member overlaps the first step, the rotating member includes an inner ring and an outer ring, the locking nut engages with the threaded structure to clamp the inner ring between the locking nut and the first step, and the outer ring is connected to the rotating base.

In a feasible embodiment, an inner wall of the mounting groove is in communication with inside and outside of the mounting chamber, the main circuit of the time-of-flight lidar is mounted at a bottom of the fixed base and located outside the mounting chamber, and the main circuit is electrically connected to the emission circuit and the receiving circuit through the mounting groove.

In a feasible embodiment, the receiver is located below the laser emitter, the receiving lens is located below the emission lens, and in a plane perpendicular to the optical axis of the emission lens and/or the optical axis of the receiving lens, a projection of the receiving lens is located on an outer peripheral side of a projection of the emission lens. The receiver is a single-photon receiver.

In a feasible embodiment, the emission unit further includes a mounting barrel, the laser emitter and the emission lens are mounted at two ends inside the mounting barrel, respectively, the mounting barrel is inserted through the receiving lens and connected to the mounting barrel, and the receiver is located below the mounting barrel.

According to a second aspect of the present disclosure, a cleaning system is provided. The cleaning system includes a cleaning docking station and the cleaning robot according to any one of the embodiments of the first aspect.

The above description is only an overview of the technical solutions of the present disclosure. To more clearly understand the technical means of the present disclosure to enable implementation in accordance with the content of the specification and to make the above and other objectives, features, and advantages of the present disclosure more obvious and easy to understand, the detailed description of the present disclosure is provided below.

### BRIEF DESCRIPTION OF THE DRAWINGS

By reading the detailed description of preferred embodiments below, various additional advantages and benefits will become clear to those of ordinary skill in the art. The drawings are provided solely for the purpose of illustrating the preferred embodiments and are not to be construed as limiting the scope of the present disclosure. In addition, the same components are denoted by the same reference numerals throughout the drawings. In the drawings:
FIG. 1 shows a schematic structural diagram of a lidar according to one embodiment of the present disclosure;
FIG. 2 shows a schematic structural diagram of the embodiment shown in FIG. 1 from a first perspective;
FIG. 3 shows a cross-sectional view of the embodiment shown in FIG. 1 from an A-A perspective;
FIG. 4 shows a partially enlarged schematic diagram of portion A in the embodiment shown in FIG. 3;
FIG. 5 shows a partially enlarged schematic diagram of portion B in the embodiment shown in FIG. 3;
FIG. 6 shows a schematic structural diagram of a part of a lidar according to one embodiment of the present disclosure;
FIG. 7 shows a schematic structural diagram of a fixed base according to one embodiment of the present disclosure;
FIG. 8 shows a schematic structural diagram of a limiting ring according to one embodiment of the present disclosure;
FIG. 9 shows a schematic structural diagram of another part of a lidar according to one embodiment of the present disclosure;
FIG. 10 shows a schematic structural diagram of yet another part of a lidar according to one embodiment of the present disclosure;
FIG. 11 shows a schematic structural diagram of the embodiment shown in FIG. 10 from one perspective;
FIG. 12 shows a schematic structural diagram of the embodiment shown in FIG. 10 from a second perspective;
FIG. 13 shows a schematic structural diagram of still another part of a lidar according to one embodiment of the present disclosure;
FIG. 14 shows a cross-sectional view of the embodiment shown in FIG. 13 from one perspective;
FIG. 15 shows a projection view of a receiving lens and an emission lens from one perspective according to one embodiment of the present disclosure; and
FIG. 16 shows a schematic structural diagram of a cleaning robot according to one embodiment of the present disclosure.

### Description of reference numerals

001: lidar, 100: fixed module, 110: emission unit, 111: laser emitter, 112: emission lens, 1121: first incident surface, 1122: first exit surface, 1123: limiting groove, 113: emission circuit, 120: receiving unit, 121: receiver, 122: receiving lens, 1221: concave spherical contact surface, 130: fixed base, 131: mounting groove, 132: first step, 133: threaded structure, 134: second step, 1341: clearance notch, 135: second supporting part, 140: mounting barrel, 141: convex spherical contact surface, 142: first boss, 143: second boss, 150: light-homogenizing element, 160: pressing ring, 161: positioning groove, 170: light-shielding ring, 180: limiting ring, 181: snap-fit part, 182: first supporting part, 200: rotating module, 210: reflecting mirror, 220: rotating base, 221: emission window, 222: receiving window, 223: base body, 2231: first slot, 2232: belt groove, 224: upper cover, 2241: second slot, 230: window lens, 240: optical filter, 300: driving part, 310: timing pulley, 400: main circuit, 500: rotating member, 600: locking member, 700: transmission part, 002: cleaning robot, 021: device main body.

### DETAILED DESCRIPTION

In the following description, numerous specific details are set forth to provide a more thorough understanding of the technical solutions according to the present disclosure. However, it will be apparent to those skilled in the art that the technical solutions according to the present disclosure may be implemented without one or more of these details.

It should be noted that the terms used herein are only for the purpose of describing specific embodiments, and are not intended to limit exemplary embodiments according to the present disclosure. As used herein, the singular forms are intended to include the plural forms as well, unless the context clearly indicates otherwise. In addition, it should be further understood that the terms "comprise" and/or "include" as used in the specification indicate the presence of the stated features, integers, steps, operations, elements, and/or assemblies, but do not exclude the presence or addition of one or more other features, integers, steps, operations, elements, assemblies, and/or combinations thereof.

Exemplary embodiments according to the present disclosure will now be described in more detail with reference to the drawings. However, these exemplary embodiments may be implemented in various forms and should not be construed as being limited to the embodiments set forth herein. It should be understood that these embodiments are provided to make the disclosure of the present disclosure thorough and complete, and to fully convey the concepts of these exemplary embodiments to those of ordinary skill in the art.

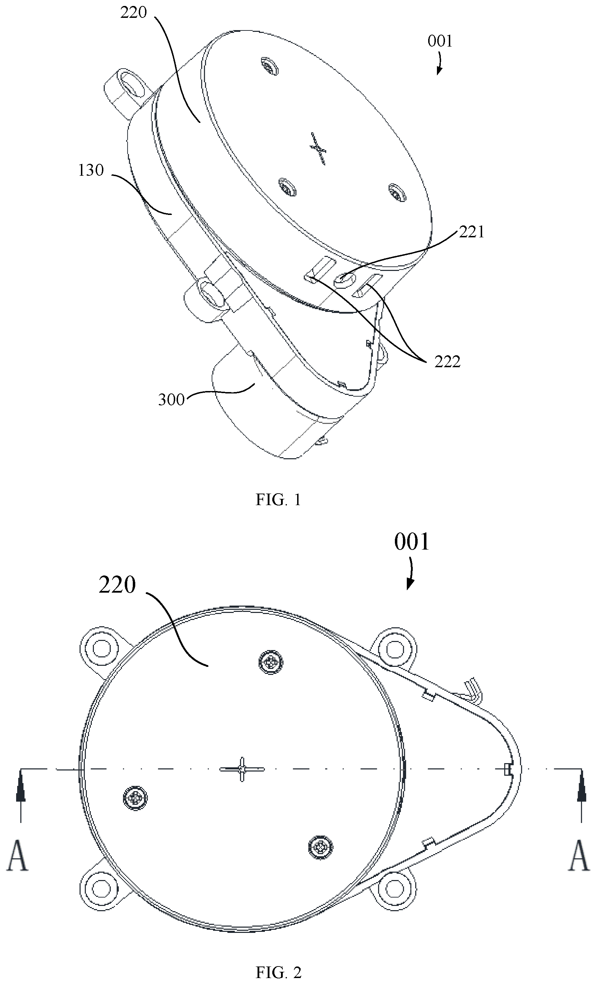

As shown in FIGs. 1 to 16, one embodiment of a first aspect of the present disclosure provides a cleaning robot 002, and one embodiment of a second aspect of the present disclosure provides a cleaning system. The cleaning robot 002 may be a sweeping robot, a sweeping and mopping integrated machine, or another cleaning robot 002 that meets requirements. The cleaning system includes a docking station and the cleaning robot 002; that is, the cleaning docking station is used in cooperation with the cleaning robot 002.

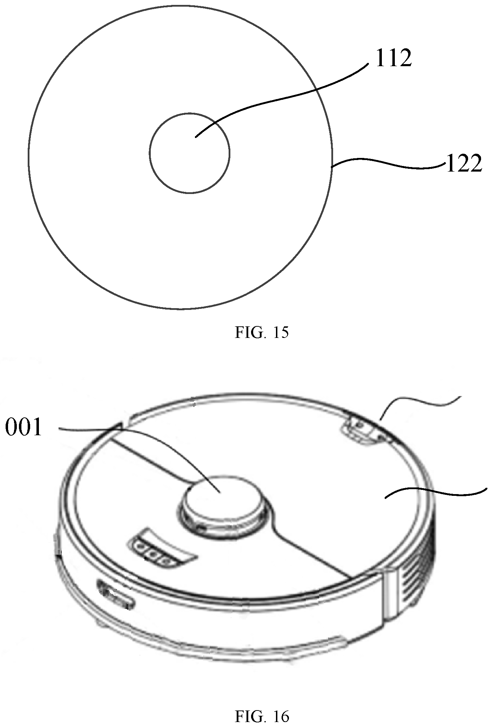

Specifically, as shown in FIG. 16, the cleaning robot 002 includes, but is not limited to: a device body, a cleaning system, a driving system, a sensing system, a control module, a power system, a human-machine interaction system, and the like. The systems described above cooperate with each other, such that the cleaning robot 002 can move autonomously to achieve a cleaning function. In the cleaning robot 002, functional elements and the like constituting the systems described above are integrally disposed in the device body. When the cleaning robot 002 starts to operate, the cleaning robot 002 undocks from the cleaning docking station to perform a cleaning task. When the cleaning robot 002 completes the cleaning task or in other cases where the cleaning task needs to be suspended, the cleaning robot 002 may return to the cleaning docking station for operations such as charging, and/or water replenishment, and/or cleaning, and/or dust collection.

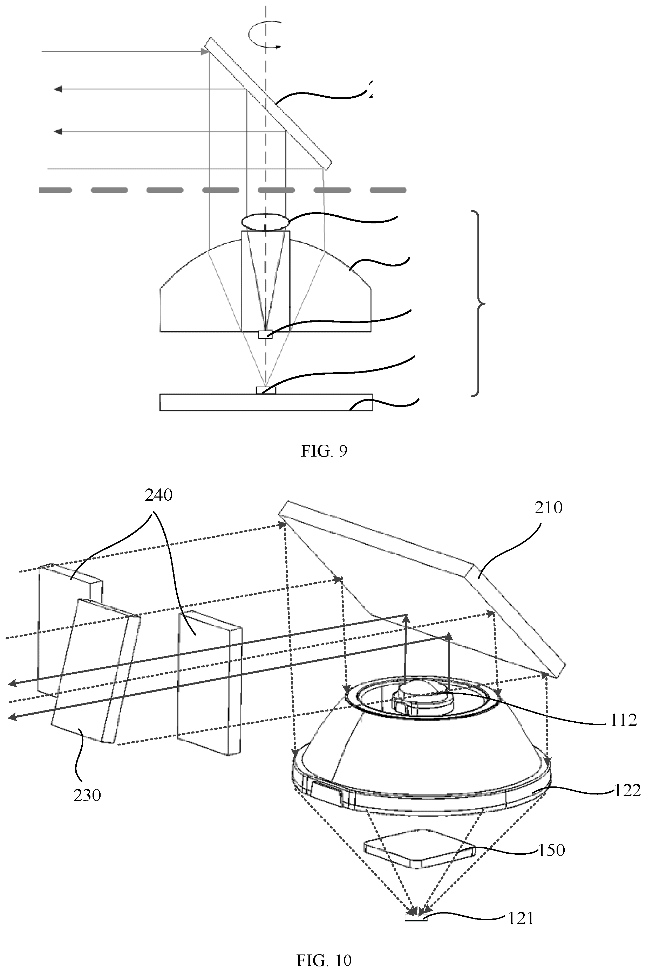

As shown in FIGs. 9, 10, 11, 12, and 16, the cleaning robot 002 according to the embodiment of the present disclosure includes: a device main body 021 and a time-of-flight lidar 001. The time-of-flight lidar 001 is disposed on the device main body 021, and the time-of-flight lidar 001 includes an emission unit 110 and a receiving unit 120. The emission unit 110 includes a laser emitter 111 and an emission lens 112 disposed in sequence, and the receiving unit 120 includes a receiver 121 and a receiving lens 122 disposed in sequence. The optical axis of the emission lens 112 and the optical axis of the receiving lens 122 are coaxially disposed.

The time-of-flight lidar 001 is disposed on the device main body 021 to detect distances between the cleaning robot 002 and the surrounding obstacles and the surrounding environment by using the time-of-flight lidar 001. It can be understood that the time-of-flight lidar 001 serves as an important sensor for the cleaning robot 002 and plays a significant role in operating conditions such as mapping, navigation, and obstacle avoidance. The principle of the time-of-flight lidar 001 is to calculate a distance to a target object by using a propagation speed of a laser beam in the space and a round-trip time of the laser beam. The time-of-flight lidar 001 has the advantages of high precision, high speed, high resolution, etc., and thus can meet the functional requirements of the cleaning robot 002.

In this embodiment, the time-of-flight lidar 001 includes the emission unit 110 and the receiving unit 120. The light emitted by the laser emitter 111 passes through the emission lens 112 and is then directed toward obstacles and the surrounding environment, and the received light returned from the obstacles and the surrounding environment passes through the receiving lens 122 and is received by the receiver 121, thereby achieving the ranging function. The optical axis of the emission lens 112 and the optical axis of the receiving lens 122 are coaxially disposed. Compared with the related art in which the optical axis of the emission lens and the optical axis of the receiving lens are arranged separately, the volume of the lidar 001 can be appropriately reduced, thereby meeting the design requirements for a small volume and a compact structure of the lidar 001, reducing the space occupied by the cleaning robot 002, expanding the application range of the cleaning robot 002, facilitating storage, and meanwhile, helping reduce the manufacturing cost of the lidar 001.

As shown in FIGs. 9, 10, 11, and 12, in some possible embodiments according to the present disclosure, the time-of-flight lidar 001 further includes: a reflecting mirror 210. The reflecting mirror 210 is obliquely disposed above the emission lens 112 and the receiving lens 122, and the reflecting mirror 210 is configured to rotate with the optical axis of the emission lens 112 and/or the optical axis of the receiving lens 122 as a rotation axis. The light emitted by the laser emitter 111 passes through the emission lens 112 and is then redirected by the reflecting mirror 210 to be directed toward the obstacles and the surrounding environment, and the received light returned from the obstacles and the surrounding environment is redirected by the reflecting mirror 210 and then passes through the receiving lens 122 to be received by the receiver 121. In this way, the detection function of the lidar 001 is achieved. The reflecting mirror 210 rotates to cooperate with the emission unit 110 and the receiving unit 120, such that the detection range of the laser emitter 111 can be expanded, thereby achieving detection of obstacles and the surrounding environment in a plurality of directions around the cleaning robot 002. Specifically, the solid lines in FIG. 10 represent the emitted light, and the dashed lines in FIG. 10 represent the received light.

Specifically, for example, the reflecting mirror 210 is configured to be rotatable by 360° with the optical axis of the receiving lens 122 as a rotation axis, such that the lidar 001 can detect obstacles and the surrounding environment over a 360° range around the cleaning robot 002, thereby helping improve the sensing precision and sensing accuracy of the cleaning robot 002, and improving the operating accuracy of the cleaning robot 002.

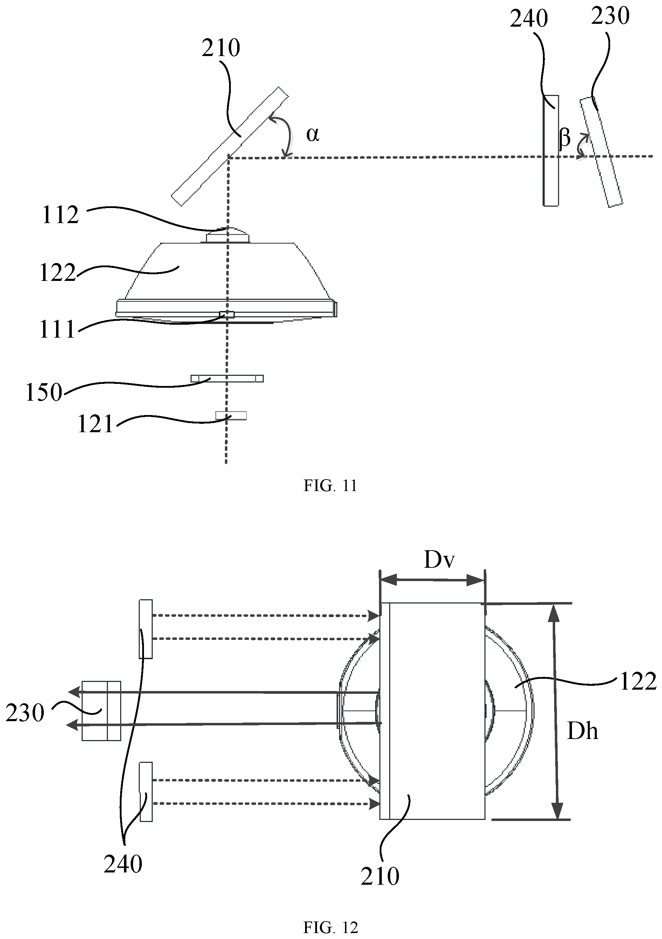

As shown in FIG. 11, in some possible embodiments according to the present disclosure, an inclination angle of the reflecting mirror 210 relative to the horizontal line is 45° to 47°; that is, the inclination angle of the reflecting mirror 210 relative to the horizontal line is at least 45° and does not exceed 47°. The inclination angle of the reflecting mirror 210 relative to the horizontal line is represented by α; that is, α ranges from 45° to 47°. In this way, it can ensure that the reflecting mirror 210 can relatively comprehensively project the light emitted by the emission unit 110 out via an emission window 221 after redirecting the light, and can relatively comprehensively project the light returned by the receiving window 222 to the receiving unit 120 after redirecting the light, thereby reducing the energy loss of the emission unit 110, improving the energy utilization of the emission unit 110, and improving the ranging accuracy of the lidar 001.

Specifically, the range of the inclination angle α of the reflecting mirror 210 relative to the horizontal line may be 45°, 45.5°, 46°, 47°, or other angles.

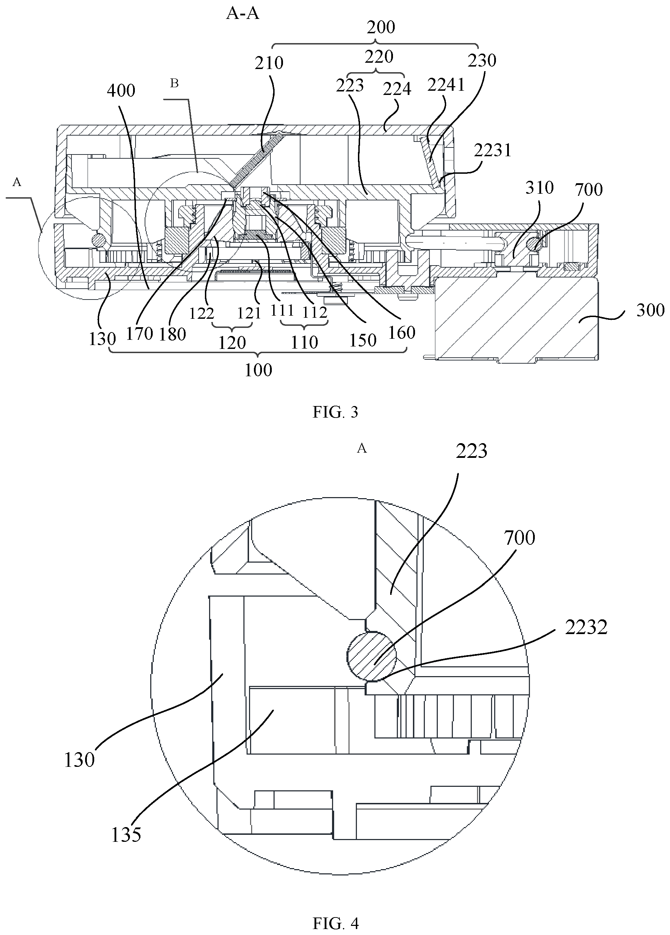

As shown in FIGs. 3, 9, 10, and 11, in the above embodiments, the reflecting mirror 210 includes a reflective surface and a substrate, and the reflective surface is located on a side, facing the emission window 221, of the substrate. In this way, it can ensure that the light emitted by the emission unit 110, after being redirected by the reflective surface of the reflecting mirror 210, is projected out via the emission window 221, and the returned received light, after being redirected by the reflective surface of the reflecting mirror 210, is received by the unit via the receiving window 222.

The reflective surface may be a dielectric high-reflective coating or a metal reflective coating, and the substrate may be glass or plastic.

As shown in FIGs. 1, 2, and 3, in some possible embodiments according to the present disclosure, the time-of-flight lidar 001 further includes: a fixed base 130, a rotating base 220, and a driving part 300. The fixed base 130 is connected to the device main body 021; that is, the entire lidar 001 is mounted on the device main body 021 via the fixed base 130. The emission unit 110 and the receiving unit 120 are mounted on the fixed base 130. The rotating base 220 is rotatably connected above the fixed base 130 and defines a mounting chamber with the fixed base 130 in an enclosing manner. The reflecting mirror 210 is mounted on the rotating base 220, and the reflecting mirror 210, the emission unit 110, and the receiving unit 120 are located within the mounting chamber. In this way, it can ensure that the emission unit 110, the receiving unit 120, and the reflecting mirror 210 are located in a closed space, thereby reducing stray light interference and improving the detection accuracy of the lidar 001.

The driving part 300 is mounted on the fixed base 130 and/or the device main body 021 and connected to the rotating base 220. The driving part 300 is configured to drive the rotating base 220 to rotate relative to the fixed base 130. In this way, the reflecting mirror 210 on the rotating base 220 is enabled to rotate around the optical axis of the receiving lens 122, thereby expanding the detection range of the lidar 001. For example, the driving part 300 may drive the rotating base 220 to rotate by 360° relative to the fixed base 130, such that the lidar 001 can detect obstacles and the surrounding environment over a 360° range around the cleaning robot 002, thereby helping improve the sensing precision and sensing accuracy of the cleaning robot 002, and improving the operating accuracy of the cleaning robot 002.

The driving part 300 may be mounted on the fixed base 130, or the driving part 300 may be mounted on the device main body 021, or the driving part 300 may be mounted on both the fixed base 130 and the device main body 021. Specifically, the driving part 300 is mounted on the fixed base 130, enabling a modular design of the time-of-flight lidar 001, thereby facilitating the disassembly and assembly of the time-of-flight lidar 001 and the device main body 021.

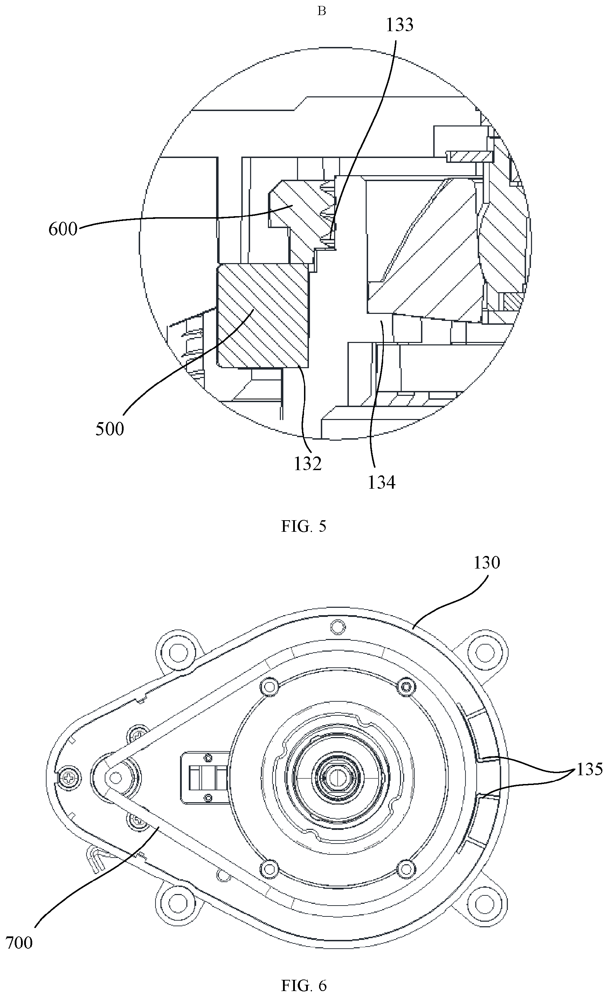

Further, as shown in FIGs. 3 and 6, the time-of-flight lidar 001 further includes a transmission part 700. The driving part 300 is connected to the rotating base 220 through the transmission part 700, so as to drive the rotating base 220 to rotate relative to the fixed base 130 through the transmission part 700.

The transmission part 700 is a transmission belt. It can be understood that the transmission part 700 may alternatively be a gear or another transmission mechanism. Taking the transmission part 700 being a transmission belt as an example, the driving part 300 is connected to the rotating base 220 through the transmission belt. For example, the driving part 300 is a motor, and an output shaft of the motor is connected to the rotating base 220 through the transmission belt, so as to drive the rotating base 220 to rotate relative to the fixed base 130. Specifically, a timing pulley 310 is disposed on the output shaft of the motor, and a timing belt is sleeved on the timing pulley 310 and the rotating base 220, such that the output shaft rotates to drive the timing pulley 310 to rotate, and then the rotating base 220 is driven by the timing belt to rotate relative to the fixed base 130.

As shown in FIG. 3, in some possible embodiments according to the present disclosure, the time-of-flight lidar 001 further includes: a main circuit 400. The main circuit 400 is mounted on the fixed base 130. The emission unit 110 further includes an emission circuit 113 electrically connected to the laser emitter 111, the receiving unit 120 further includes a receiving circuit electrically connected to the receiver 121, and the main circuit 400 is electrically connected to the emission circuit 113 and the receiving circuit.

The main circuit 400 may be a main circuit 400 of the time-flight lidar 001, for example, a circuit on a main control board of the time-flight lidar 001, and is mainly responsible for supplying power to the emission unit 110 and the receiving unit 120, controlling the emission unit 110 and/or the receiving unit 120, and the like.

In the embodiments, since both the emission unit 110 and the receiving unit are mounted on the fixed base 130; that is, the emission circuit 113 and the receiving circuit are also mounted on the fixed base 130, by mounting the main circuit 400 on the fixed base 130, the active components of the time-of-flight lidar 001 are all mounted on the fixed base 130; that is, there is no active component on the rotating base 220. Compared with the related art in which a wireless power supply portion and an optical communication portion are required for the separate arrangement of the optical axis of the emission lens and the optical axis of the receiving lens, this arrangement further simplifies the circuit scheme, which is beneficial to further reducing the manufacturing cost of the time-of-flight lidar 001, meeting the low-cost design requirements of the cleaning robot 002, and expanding the application range of the product.

In the above embodiments, the laser emitter 111 and the laser receiver 121 are horizontally disposed; that is, the light emitted by the laser emitter 111 is vertically upward or substantially propagates in a vertically upward direction, and the light received by the laser receiver 121 is vertically downward or substantially propagates in a vertically downward direction. To enable measurement of the obstacles and the surrounding environment of the time-of-flight lidar 001 in a horizontal direction, a reflecting mirror 210 may be added above the laser emitter 111 and the laser receiver 121.

Further, the laser emitter 111 is disposed above the emission circuit 113, the receiver 121 is disposed above the receiving circuit, and the main circuit 400 is located below the emission circuit 113 and the receiving circuit. With this arrangement, the main circuit 400 is prevented from blocking the light emitted by the laser emitter 111 and the light received by the receiver 121; that is, the main circuit 400 does not interfere with the optical path, which is beneficial to improving the ranging accuracy.

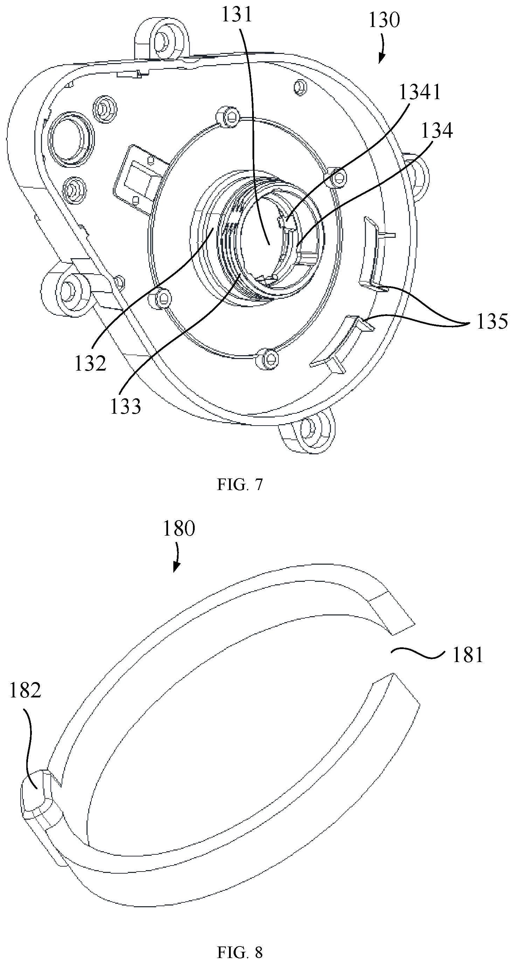

As shown in FIG. 7, in some possible embodiments according to the present disclosure, the fixed base 130 is provided with an annular mounting groove 131 located within the mounting chamber, and the emission unit 110 and the receiving unit 120 are mounted inside the mounting groove 131. It can be understood that the laser emitter 111, the emission lens 112, and the emission circuit 113 of the emission unit 110, as well as the receiver 121, the receiving lens 122, and the receiving circuit of the receiving unit 120 are all located within the annular mounting groove 131; that is, the annular mounting groove 131 can be understood as a part of the optical path channel.

As shown in FIGs. 3 and 5, the time-of-flight lidar 001 further includes a rotating member 500 and a locking member 600. The rotating member 500 is sleeved on the outer side of the mounting groove 131 and connected to the rotating base 220, the locking member 600 is sleeved on the outer side of the mounting groove 131 and located above the rotating member 500, and the locking member 600 is connected to the outer wall of the mounting groove 131 to lock the rotating member 500 on the mounting groove 131. That is, in the embodiments, by using a single locking member 600, the rotating member 500 can be locked on the outer wall of the mounting groove 131 to achieve a rotatable connection between the rotating base 220 and the fixed base 130. The structure is simple, and disassembly and assembly are facilitated. However, in the related art, the rotating member usually requires a plurality of components to be locked. For example, in the related art, resilient barbs and screws are usually used in cooperation to lock the rotating member, resulting in a large number of components and a complex assembly process. Therefore, in the embodiments, by using a single locking member 600 to achieve the locking of the rotating member 500, the number of components is reduced, and the assembly process is simple, which can further reduce the manufacturing cost of the time-of-flight lidar 001 and meet the low-cost design requirements of the cleaning robot 002.

As shown in FIG. 7, in the above embodiments, the outer wall of the mounting groove 131 is provided with a first step 132, the rotating member 500 overlaps the first step 132, and the first step 132 is used to pre-position the rotating member 500. This is beneficial to improving the assembly efficiency and assembly accuracy of the rotating member 500, thereby improving the processing efficiency of the time-of-flight radar.

As shown in FIGs. 5 and 7, the outer wall of an end part, facing the rotating base 220, of the mounting groove 131 is provided with a threaded structure 133, the locking member 600 is a locking nut, and the rotating member 500 includes an inner ring and an outer ring. For example, the rotating member 500 is a bearing, the locking nut engages with the threaded structure 133 to clamp the inner ring of the bearing between the locking nut and the first step 132, and the outer ring of the bearing is connected to the rotating base 220. In this way, by using a single locking nut to engage with the threaded structure 133 on the outer wall of the mounting groove 131, the rotating member 500 can be stably and securely locked outside the mounting groove 131, thereby ensuring the rotatable connection between the rotating base 220 and the fixed base 130. The assembly operation is simple and easy to achieve, the threaded structure 133 on the outer wall of the mounting groove 131 is convenient to process, and the cost of the locking nut is low, which can effectively reduce the manufacturing cost of the time-of-flight radar.

Further, as shown in FIG. 3, the inner wall of the mounting groove 131 is in communication with the inside and outside of the mounting chamber; that is, the mounting groove 131 is a through groove. The mounting groove 131 extends through the fixed base 130, the main circuit 400 is mounted at the bottom of the fixed base 130 and located outside the mounting chamber, and the main circuit 400 is electrically connected to the emission circuit 113 and the receiving circuit through the mounting groove 131. Since the main circuit 400 is located outside the mounting chamber, the connection between the main circuit 400 and a power supply part is facilitated, and the maintenance and replacement of the main circuit 400 is facilitated. In addition, the main circuit 400 located outside the mounting chamber has good ventilation and heat dissipation effects, avoiding the problem that the main circuit is prone to failure due to poor ventilation and heat dissipation effects when arranged inside the mounting chamber, and thus helping prolong the service life of the main circuit 400 and improve the reliability of the time-of-flight lidar 001.

As shown in FIGs. 11 and 15, in some possible embodiments according to the present disclosure, the receiver 121 is located below the laser emitter 111, the receiving lens 122 is located below the emission lens 112, and in a plane perpendicular to the optical axis of the emission lens 112 and/or the optical axis of the receiving lens 122, a projection of the receiving lens 122 is located on an outer peripheral side of a projection of the emission lens 112. The receiver 121 is a single-photon receiver 121.

With this arrangement, the receiver 121 is prevented from blocking the light emitted by the laser emitter 111, thereby reducing optical energy loss of the laser emitter 111 and improving the optical energy utilization of the laser emitter 111. It can be understood that the received light returned from the obstacles and the surrounding environment, after being redirected by the receiving lens 122, can be in contact with the receiver 121.

As shown in FIG. 15, in the embodiments, since the projection of the receiving lens 122 is located on the outer peripheral side of the projection of the emission lens 112 in the plane perpendicular to the optical axis of the emission lens 112 and/or the optical axis of the receiving lens 122, the effective area of the receiving lens 122 is small. Therefore, the receiver 121 is configured as a single-photon receiver 121. For example, the receiver 121 is a single-photon receiver 121 employing a SPAD (single photon avalanche diode, single-photon detector), which has significant advantages in terms of integration level, optical gain, accuracy, etc. than exemplary optical receivers 121 such as a PIN (positive-intrinsic-negative, photodiode) and an APD (avalanche photon diode, avalanche diode), thereby ensuring the detection accuracy of the time-of-flight lidar 001.

As shown in FIG. 3, in some possible embodiments according to the present disclosure, the emission unit 110 further includes a mounting barrel 140. The laser emitter 111 and the emission lens 112 are mounted at two ends inside the mounting barrel 140, respectively. The mounting barrel 140 is inserted through the receiving lens 122 and connected to the mounting barrel 140, and the receiver 121 is located below the mounting barrel 140.

The emission lens 112 is located on an emission optical path of the laser emitter 111, and an exit surface of the emission lens 112 faces the outside of the mounting barrel 140. In this way, the emission lens 112 and the laser emitter are mounted in the same structural member, such that a collimated optical path can be formed.

Further, a central portion of the receiving lens 122 is configured as a hollow structure. The mounting barrel 140 is inserted through the hollow structure and connected to the receiving lens 122, and the receiver 121 is disposed below the receiving lens 122 and opposite to the laser emitter 111. In this way, the optical axis of the receiving lens 122 and the optical axis of the emission lens 112 are enabled to be coaxially disposed, and it can ensure that the receiver 121 reliably receives the light projected by the receiving lens 122; the structure is simple. Specifically, the mounting barrel 140 may have a cylindrical shape, a conical shape, a bowl shape, or other shapes.

In the above embodiments, the mating surface between the mounting barrel 140 and the receiving lens 122 is in spherical contact, and the mounting barrel 140 and the receiving lens 122 are configured to be fixedly connected.

That is, the lens barrel and the receiving lens 122 are configured as a ball joint. In this way, in actual application scenarios, during assembly, the relative positions of the mounting barrel 140 and the emission lens 112 can be adjusted first, enabling the laser emission direction of the emission unit 110 and the optical axis of the receiving lens 122 to meet the detection accuracy requirements. For example, the position of the mounting barrel 140 relative to the emission lens 112 may be adjusted, such that the optical axis of the emission lens 112 coincides with the optical axis of the receiving lens 122, or the optical axis of the emission lens 112 is perpendicular to the horizontal line to ensure that the emission optical axis of the emission unit 110 is oriented vertically upward, and then the mounting barrel 140 is fixedly connected to the receiving lens 122 to complete the assembly of the emission unit 110 and the receiving lens 122 and ensure that the lidar 001 meets the detection accuracy requirements. In this way, the processing accuracy requirements for the elements can be lowered, thereby reducing the manufacturing cost. In addition, this method can improve the processing yield of the product, making it suitable for promotion and application.

Further, the mounting barrel 140 and the receiving lens 122 may be fixedly connected by means of an adhesive, a threaded structure, a mortise-and-tenon structure, or the like. The mounting barrel 140 and the receiving lens 122 are fixedly connected by means of an adhesive, which is simple to operate and facilitates assembly, and can ensure that the relative positions of the mounting barrel 140 and the receiving lens 122 are reliable and stable after the fixed connection, thereby improving the detection accuracy of the lidar 001.

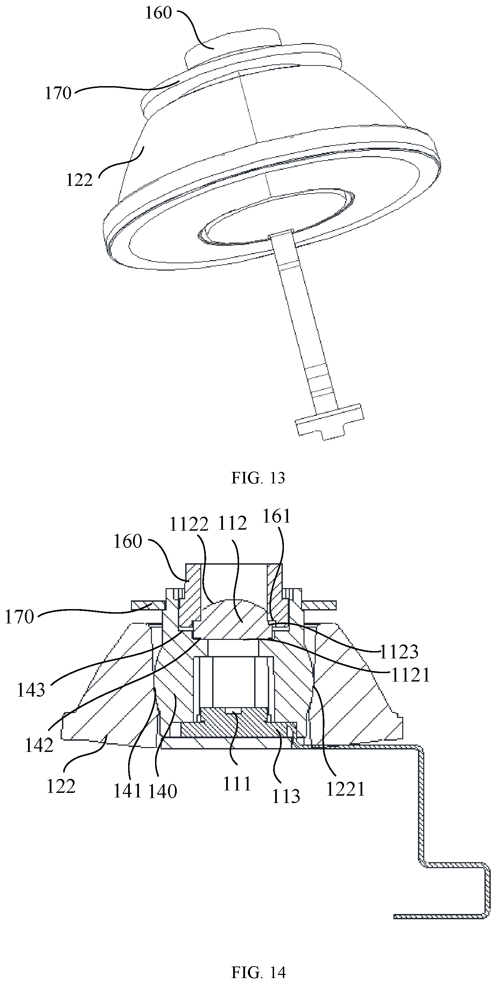

As shown in FIGs. 13 and 14, in some possible embodiments according to the present disclosure, a first mounting opening is formed at an end of the mounting barrel 140 away from the laser emitter 111 for accommodating the emission lens 112. The lidar 001 further includes a pressing ring 160. The pressing ring 160 is located on a side of the emission lens 112 away from the laser emitter 111, and the pressing ring 160 is connected to the side wall of the first mounting opening to fix the emission lens 112 at the first mounting opening.

During assembly, the emission lens 112 may be first mounted at the first mounting opening, then the emission lens 112 is clamped at the first mounting opening by using the pressing ring 160, and the pressing ring 160 is connected to the side wall of the first mounting opening, such that the emission lens 112 can be reliably and stably fixed on the mounting barrel 140.

Since the emission lens 112 of the lidar 001 according to the embodiment of the present disclosure may have a small dimension and light weight, in the case that the emission lens is directly fixed on the mounting barrel by using an adhesive as in the related art, the injected adhesive may cause the emission lens to float upward, such that the focal length of the emission lens deviates from a design value, resulting in poor measurement accuracy. In addition, in the case that the emission lens is fixed on the mounting barrel by dispensing adhesive at discrete points around the emission lens with a small dimension, the adhesive may easily remain on the lens surface, leading to obstruction of the light spot energy. Therefore, in the present disclosure, the pressing ring 160 is used to clamp the emission lens 112 at the first mounting opening of the mounting barrel 140, and the pressing ring 160 is connected to the side wall of the first mounting opening, thereby ensuring that the design value of the focal length of the emission lens 112 can be accurate, and thus ensuring good measurement accuracy. In addition, the difficulty in dispensing adhesive at discrete spots around the emission lens 112 can be reduced, assembly can be facilitated, and the problem of obstruction of light spot energy by adhesive can be reduced or avoided.

Specifically, the pressing ring 160 and the side wall of the first mounting opening of the mounting barrel 140 may be fixedly connected by means of an adhesive, a threaded structure, a mortise-and-tenon structure, or other structures. Specifically, adhesive may be dispensed at discrete spots around the pressing ring 160 to connect the pressing ring 160 to the side wall of the first mounting opening, which is simple to operate and facilitates assembly, and can ensure the connection reliability between the pressing ring 160 and the side wall of the first mounting opening, thereby improving the clamping reliability of the emission lens 112.

As shown in FIG. 14, in the above embodiment, the side wall of the first mounting opening is provided with a first boss 142. The emission lens 112 includes a first incident surface 1121 and a first exit surface 1122. The first incident surface 1121 overlaps the first boss 142, and the pressing ring 160 is in contact with the first exit surface 1122 and connected to the side wall of the first mounting opening.

The first incident surface 1121 of the emission lens 112 overlaps the first boss 142 to limit the emission lens 112, which can ensure that the position of the emission lens 112 is reasonable, thereby making the focal length thereof meet the design requirements. Then, the pressing ring 160 is used to press against the emission lens 112 from one side of the first exit surface 1122 of the emission lens 112 and is connected to the side wall of the first mounting opening, such that the emission lens 112 can be reliably and stably clamped and fixed on the mounting barrel 140, which is simple to operate and convenient to mount.

As shown in FIG. 14, in the above embodiment, the side wall of the first mounting opening is further provided with a second boss 143. The inner diameter of the first boss 142 is smaller than that of the second boss 143, and the first boss is located on a side of the second boss 143 close to the laser emitter 111; that is, the second boss 143 is close to the outside of the first mounting opening. The first incident surface 1121 is a planar surface, the first exit surface 1122 is a curved surface, and a limiting groove 1123 is formed in the first exit surface 1122. Specifically, the limiting groove 1123 is an annular groove.

In an actual assembly process, the emission lens 112 may be inserted into the mounting barrel 140 from top to bottom from the outside of the first mounting opening, such that the first incident surface 1121 of the emission lens 112 overlaps the first boss 142 to ensure that the position of the emission lens 112 is reasonable, thereby making the focal length thereof meet the design requirements. Then, a mounting end of the pressing ring 160 is inserted into the first mounting opening, and a positioning groove 161 on the inner wall of the mounting end engages with the limiting groove 1123 on the first exit surface 1122 of the emission lens 112, such that the pressing ring 160 cannot continue to move in the direction close to the laser emitter 111, thereby clamping and fixing the receiving lens 122 between the pressing ring 160 and the first boss 142. Subsequently, the outer wall of the mounting end is fixedly connected to the side wall of the first mounting opening to fix the pressing ring 160. In this way, the receiving lens 122 can be firmly clamped and securely fixed at the first mounting opening.

Specifically, the outer wall of the mounting end and the side wall of the first mounting opening may be connected by means of an adhesive to fix the pressing ring 160 to the mounting barrel 140. Since the outer wall of the mounting end is connected to the side wall of the first mounting opening by means of an adhesive, and the positioning groove 161 on the inner wall of the mounting end engages with the limiting groove 1123 on the first exit surface 1122 of the emission lens 112, the possibility of contamination of the emission lens 112 by adhesive can be reduced, and the problem of obstruction of light spot energy due to contamination of the emission lens 112 by adhesive can be avoided.

As shown in FIGs. 3 and 14, in some possible embodiments according to the present disclosure, the lidar 001 further includes: a light-shielding ring 170. The light-shielding ring 170 is sleeved on the outside of the mounting barrel 140 and located above the receiving lens 122, and the light-shielding ring 170 is configured to block at least a part of the light directed toward the receiving lens 122, thereby helping improve the detection accuracy of the lidar 001.

Further, a part of the light emitted by the laser emitter 111 passes through the emission lens 112 and then is redirected by the reflecting mirror 210 toward the receiving lens 122. Therefore, the arrangement of the light-shielding ring 170 can effectively prevent stray light generated after the emitted light beam passes through the reflecting mirror 210 from returning to the receiving lens 122 to cause optical crosstalk that affects ranging accuracy, thereby helping improve the detection accuracy of the lidar 001.

The light-shielding ring 170 and the mounting barrel 140 may be connected by means of a snap-fit structure and/or an adhesive, such that the operation is simple, the mounting is convenient, and a reliable connection between the light-shielding ring 170 and the mounting barrel 140 can be ensured. Specifically, the light-shielding ring 170 may be connected to the mounting barrel 140 by means of a snap-fit structure or an adhesive, or the light-shielding ring 170 may be connected to the mounting barrel 140 by means of both the snap-fit structure and the adhesive.

A gap is provided between the light-shielding ring 170 and the receiving lens 122, such that the receiving lens 122 and the mounting barrel 140 can move relative to each other. In this way, during assembly, the emission direction of the laser from the emission unit 110 can be universally adjusted relative to the optical axis of the receiving lens 122, avoiding the problem that the mounting barrel 140 and the receiving lens 122 are jammed and thus cannot be adjusted due to tight contact between the light-shielding ring 170 and the receiving lens 122.

As shown in FIG. 14, a convex spherical contact surface 141 is provided on an outer peripheral side of the mounting barrel 140, a concave spherical contact surface 1221 is provided on an inner peripheral side of the receiving lens 122, and the convex spherical contact surface 141 is disposed opposite to and at least partially mated with the concave spherical contact surface 1221. In this way, the mounting barrel 140 and the receiving lens 122 form a ball joint, such that the positions of the mounting barrel 140 and the receiving lens 122 can be adjusted, thereby enabling universal adjustment of the direction of an emitted light beam from the emission unit 110. The convex spherical contact surface 141 and the concave spherical contact surface 1221 are easy to implement and process, and have relatively low manufacturing costs. It can be understood that the central portion of the receiving lens 122 is configured as a hollow structure, the mounting barrel 140 is inserted through the hollow structure and connected to the receiving lens 122, and the space enclosed by the inner peripheral side of the receiving lens 122 is in the shape of the hollow structure.

Specifically, the dimension of the gap provided between the light-shielding ring 170 and the receiving lens 122 may be reasonably designed based on the specific structures of the convex spherical contact surface 141 and the concave spherical contact surface 1221.

In some possible embodiments according to the present disclosure, the mounting barrel 140 and the receiving lens 122 are mounted inside the fixed base 130; that is, in an actual assembly process, the position of the fixed base 130 is fixed. Since the receiving lens 122 is sleeved on the outside of the mounting barrel 140, when the receiving lens 122 is mounted inside the fixed base 130, the mounting barrel 140 is also indirectly mounted on the fixed base 130.

As shown in FIG. 3, the emission unit 110 further includes an emission circuit 113 configured as a flexible member. A part of the emission circuit 113 is mounted inside the mounting barrel 140, and a part of the emission circuit 113 is located outside the mounting barrel 140. Since the emission circuit 113 is a flexible member, the part of the emission circuit 113 located outside the mounting barrel 140 may change its position under the action of an external force. For example, when the cleaning robot 002 is subjected to an external force during turning or surmounting obstacles, the part of the emission circuit 113 outside the mounting barrel 140 may be driven to change its position.

Therefore, in the embodiments, the lidar 001 further includes a limiting ring 180. The limiting ring 180 is configured to be in contact with the part of the emission circuit 113 located outside the mounting barrel 140 to limit the movement of at least a part of the emission circuit 113, and the part of the emission circuit 113 located outside the mounting barrel 140 is limited by the limiting ring 180, thereby ensuring the positioning and orientation of the part of the emission circuit 113, reducing the possibility of movement of the entire emission circuit 113 when the cleaning robot 002 turns or surmounts obstacles, and reducing the influence of the movement of the emission circuit 113 on the energy distribution of a receiving optical path, thus ensuring good detection accuracy. In addition, compared with using adhesive to fix the part of the emission circuit in the related art, using the limiting ring 180 to limit the emission circuit 113 is beneficial to reducing the overall manufacturing cost of the lidar 001 since the cost of the adhesive is relatively high.

Specifically, the emission circuit of the flexible member may be an FPC (flexible printed circuit, flexible circuit board) or another structure.

In the above embodiment, the laser emitter 111 is arranged on the emission circuit 113, and the emission circuit 113 is mounted at the bottom end of the mounting barrel 140; that is, a part of the emission circuit 113 extends to the outside of the mounting barrel 140 through the bottom end of the mounting barrel 140. It can be understood that since the mounting barrel 140 and the receiving lens 212 are mounted inside the fixed base 130, the part of the emission circuit located outside the mounting barrel 140 is located inside the fixed base 130. Therefore, the limiting ring 180 is mounted inside the fixed base 130 and below the mounting barrel 140, such that the part of the emission circuit 113 located outside the mounting barrel 140 overlaps the limiting ring 180, and then the limiting ring 140 is in contact with the part of the emission circuit 113 to limit the part of the emission circuit 113. In this way, the positioning and orientation of the part of the emission circuit 113 can be ensured, thereby reducing the influence on the energy distribution of the receiving optical path due to the movement of the emission circuit 113 with the cleaning robot 002, and thus ensuring good detection accuracy.

As shown in FIG. 7, in some possible embodiments according to the present disclosure, a second step 134 is provided inside the mounting groove 131 of the fixed base 130, and the receiving lens 122 is fixed on the second step 134. Specifically, the receiving lens 122 may be fixed on the second step 134 by means of an adhesive, a snap-fit structure, or another structure.

As shown in FIG. 8, a positioning part located below the second step 134 is further disposed inside the fixed base 130, a snap-fit part 181 is disposed on the limiting ring 180, and the positioning part and the snap-fit part 181 are adapted to limit the movement of the limiting ring 180 relative to the fixed base 130. In this way, the limiting ring 180 can be rapidly and conveniently fixed on the fixed base 130 by using the positioning part and the snap-fit part 181, and the mounting cost is low. The snap-fit part 181 includes a slot, and/or a notch, and/or a protrusion. In the case where the snap-fit part 181 is a slot and/or a notch, the material consumption of the limiting ring 180 can be further reduced, and the manufacturing cost of the limiting ring 180 can be further reduced, thereby reducing the manufacturing cost of the lidar 001.

A clearance notch 1341 for providing clearance for the emission circuit 113 is formed in the second step 134, an end part of the limiting ring 180 facing the mounting barrel 140 is provided with a protruding first supporting part 182, and the first supporting part 182 is opposite to the clearance notch 1341 to support the emission circuit 113 located in the clearance notch 1341. In this way, the emission circuit 113 located in the clearance notch 1341 will not fall out of the clearance notch 1341 under the support of the first supporting part 182; that is, the emission circuit 113 located in the clearance notch 1341 is retained in the clearance notch 1341 by the first supporting part 182. As a result, the positioning and orientation of a part of the emission circuit 113 can be ensured, thereby reducing the possibility of movement of the entire emission circuit 113 when the cleaning robot 002 turns or surmounts obstacles, and reducing the influence of the movement of the emission circuit 113 on the energy distribution of the receiving optical path, thus ensuring good detection accuracy.

In some possible embodiments according to the present disclosure, the transmission part 700 may alternatively be a gear, a transmission belt, or another transmission mechanism. Taking the transmission part 700 being a transmission belt as an example, the driving part 300 is connected to the rotating base 220 through the transmission belt. For example, the driving part 300 is a motor, and an output shaft of the motor is connected to the rotating base 220 through the transmission belt, so as to drive the rotating base 220 to rotate relative to the fixed base 130.

As shown in FIGs. 3, 4, and 6, in some possible embodiments according to the present disclosure, the transmission part 700 is a transmission belt, a second supporting part 135 is disposed in the fixed base 130, and the second supporting part 135 is located below the transmission belt and disposed adjacent to the transmission belt. In this way, when the transmission belt initially derails downward and tends to continue to derail downward, the second supporting part 135 can effectively support the transmission belt, preventing the transmission belt from continuing to derail downward and thus affecting transmission accuracy, thereby ensuring the reliability of the rotation of the rotating base 220 relative to the fixed base 130.

As shown in FIGs. 3, 4, and 6, in some possible embodiments according to the present disclosure, a belt groove 2232 is formed in the rotating base 220, the driving part 300 includes an output shaft and a timing pulley 310 mounted on the output shaft, and a transmission belt is wound around the belt groove 2232 and the output shaft of the driving part 300. In this way, the output shaft of the driving part 300 rotates to drive the timing pulley 310 to perform transmission, such that the rotating base 220 can be driven to rotate relative to the fixed base 130 via the transmission belt.

The second supporting part 135 on the fixed base 130 is located below the belt groove 2232 and disposed adjacent to an opening of the belt groove 2232. In this way, the transmission belt can be effectively supported in the belt groove 2232 by the second supporting part 135, thereby preventing the transmission belt from derailing from the belt groove 2232. It can be understood that, in a normal case, the belt groove 2232 provides a certain limiting function for the transmission belt, such that the transmission belt can be stably seated in the belt groove 2232 to drive the rotating base 220 and the timing pulley 310 to rotate synchronously. In the event that the transmission belt tends to derail from the belt groove 2232, the transmission belt will move to abut against the second supporting part 135. Since the second supporting part 135 is located below the belt groove 2232 and disposed adjacent to the opening of the belt groove 2232, under the support of the second supporting part 135, the transmission belt is still located in the belt groove 2232, and thus will not derail from the belt groove 2232. In this way, the belt groove 2232 and the second supporting part 135 cooperate with each other, which can effectively prevent the rotating base 220 from failing to rotate relative to the fixed base 130 caused by the transmission belt derailing from the belt groove 2232 due to an external force during production or use of the lidar 001, thereby improving the reliability of the lidar 001.

As shown in FIG. 4, in the above embodiments, the top of the second supporting part 135 is not higher than the inner bottom of the belt groove 2232. This arrangement can prevent the rotating base 220 from failing to rotate smoothly due to interference between the top of the second supporting part 135 and the part of the transmission belt exposed outside the belt groove 2232 when the top of the second supporting part is higher than the inner bottom of the belt groove 2232. As a result, the friction between the transmission belt and the top of the second supporting part 135 during rotation of the rotating base 220 can be reduced, thereby helping prolong the service life of the transmission belt.

Specifically, the height difference between the top of the second supporting part 135 and the inner bottom of the belt groove 2232 may be 1 mm to 5 mm. The height difference between the top of the second supporting part 135 and the inner bottom of the belt groove 2232 is reasonably set, such that when friction between the transmission belt and the top of the second supporting part 135 during rotation of the rotating base 220 is reduced as much as possible, it can ensure that the second supporting part 135 provides a good supporting function for the transmission belt that tends to derail from the belt groove 2232, thereby enabling the transmission belt to be reliably limited in the belt groove 2232 and not to derail from the belt groove 2232. Specifically, the height difference between the top of the second supporting part 135 and the inner bottom of the belt groove 2232 may be 1 mm, 2 mm, 3 mm, 5 mm, or another value.

Further, as shown in FIG. 6, since the transmission belt is sleeved on the timing pulley 310, the timing pulley 310 provides a certain supporting force to the transmission belt. The second supporting part 135 and the timing pulley 310 are distributed on two sides of the mounting barrel 140. The second supporting part 135 and the timing pulley 310 support the transmission belt from the two sides, which is beneficial to improving the stability of the movement of the transmission belt, thereby improving the stability of the rotation of the rotating base 220 relative to the fixed base 130 and improving the detection accuracy.

As shown in FIG. 6, one or a plurality of second supporting parts 135 are provided, and the plurality of second supporting parts 135 are spaced apart. The number of second supporting parts 135 may be reasonably set based on a specific structure of the second supporting part 135, thereby providing reliable and stable support for the transmission belt. Specifically, the number of second supporting parts 135 may be one, two, three, or other numbers. Specifically, the second supporting part 135 may be a protruding structure disposed on the fixed base 130.

In some possible embodiments according to the present disclosure, the fixed base 130, and the emission unit 110, the receiving unit 120, the main circuit 400, and the like that are mounted on the fixed base 130 form a fixed module 100, and the rotating base 220 and the reflecting mirror 210 mounted on the rotating base 220 form the rotating module 200. An emission window 221 and receiving windows 222 are formed on the rotating base 220, and the receiving windows 222 are distributed in pairs on two sides of the emission window 221.

In the embodiments, the cleaning robot 002 of the lidar 001 the cleaning robot 002 the cleaning robot 002 the cleaning robot 002 the cleaning robot 002 the cleaning robot 002 the receiving windows 222 are arranged on two sides of the emission window 221 in pairs; that is, centered on the emission window 221, an equal number of receiving windows 222 are arranged on two sides of the emission window 221. In this way, the consistency of detection structures at various angles of the lidar 001 can be improved. For example, the consistency of ranging at various angles of the lidar 001 can be improved.

Further, along a circumferential direction of the rotating base 220, the receiving windows 222 are arranged on two sides of the emission window 221 in pairs; that is, along the circumferential direction of the rotating base 220, the projections of the receiving windows 222 in a horizontal plane are located on two sides of the projection of the emission window 221 in the horizontal plane. In this way, the height of the lidar 001 can be reduced, such that the lidar 001 can be conveniently and accurately mounted on the device main body 021 of the cleaning robot 002, facilitating the mounting of the cleaning robot 002. In addition, the overall height of the cleaning robot 002 can be reduced, meeting the design requirements for a compact structure and a small volume of the cleaning robot 002, reducing the space occupied by the cleaning robot 002, expanding the application range of the cleaning robot 002, and facilitating storage.

It can be understood that the shape of the emission window 221 and the shape of the receiving window 222 may be the same or different. As shown in FIG. 1, the shape of the emission window 221 is circular, and the shape of the receiving window 222 is rectangular.

It can be understood that, in a horizontal direction, the geometric center of the emission window 221 and the geometric center of the receiving window 222 may be flush or staggered.

Specifically, the number of receiving windows 222 may be one pair, two pairs, three pairs, or other number pairs; that is, one receiving window 222, two receiving windows 222, three receiving windows 222, or other number of receiving windows 222 may be arranged on each side of the emission window 221 in the horizontal direction. It can be understood that the number of pairs of the receiving windows 222 may be reasonably selected based on the dimension of the lidar 001. As shown in FIG. 1, the number of pairs of the receiving windows 222 is one pair.

As shown in FIG. 12, in some possible embodiments according to the present disclosure, the dimension of the reflecting mirror 210 includes a first dimension Dv and a second dimension Dh that are perpendicular to each other, and a direction of the first dimension Dv is parallel to a horizontal line. For example, the first dimension Dv may be understood as the width of the reflecting mirror 210, and the second dimension Dh may be understood as the length of the reflecting mirror 210. It can be understood that the reflecting mirror 210 may further include a third dimension, and the third dimension may be understood as the thickness of the reflecting mirror 210. The dimension of an emission aperture of the emission unit 110 is D1, and the dimension of a receiving aperture of the receiving unit 120 is D2, where Dv satisfies: D1 < Dv/1.414 < D2, and Dh satisfies: D2 < Dh.

This arrangement, on the basis of ensuring that the lidar 001 has a sufficient receiving area, can effectively reduce the height of the lidar 001, such that the lidar 001 can be conveniently and accurately mounted on the device main body 021 of the cleaning robot 002, facilitating the mounting of the cleaning robot 002. In addition, the overall height of the cleaning robot 002 can be reduced, thereby reducing the space occupied by the cleaning robot 002, expanding the application range of the cleaning robot 002, and facilitating storage.

As shown in FIGs. 1, 10, and 12, in some possible embodiments according to the present disclosure, an opening area of the emission window 221 is greater than an exit area of the emission aperture. The emission aperture may be understood as the emission lens 112 of the emission unit 110; that is, the opening area of the emission window 221 needs to be greater than an area of the exit surface of the emission lens 112. This arrangement can ensure that the area of the emission window 221 is large enough, such that the light emitted by the emission unit 110 is enabled to be relatively comprehensively projected out through the emission window 221 after the angle of the light is changed by the reflecting lens, thereby reducing the energy loss of the emission unit 110 and improving the energy utilization of the emission unit 110.

Specifically, the emission window 221 may have a circular shape, a rectangular shape, or other shapes. When the emission window 221 is a circular window, the dimension of the emission window 221 may be understood as the diameter of the emission window 221. In this case, the diameter of the emission window 221 is greater than the diameter of the emission lens 112. When the emission window 221 is a rectangular window, both the length and the width of the emission window 221 are greater than the diameter of the emission lens 112.

As shown in FIGs. 3, 10, 11, and 12, in some possible embodiments according to the present disclosure, the lidar 001 further includes a first window lens 230. The first window lens 230 is mounted on the rotating base 220 and corresponds to the emission window 221, and the first window lens 230 is configured to shield the emission window 221. The first window lens 230 is obliquely disposed relative to the light output axis of the reflecting mirror 210, such that the first window lens 230 is not completely perpendicular to the light output axis of the reflecting mirror 210, thereby avoiding optical back-reflection crosstalk, and thus improving the ranging accuracy of the lidar 001.

Further, as shown in FIG. 11, the inclination angle of the first window lens 230 relative to the light output axis of the reflecting mirror 210 is β, and β ranges from 2° to 45°. Specifically, the inclination angle of the first window lens 230 relative to the light output axis of the reflecting mirror 210 may be reasonably set based on the arrangement position and dimension of the reflecting mirror 210, so as to effectively avoid optical back-reflection crosstalk. Specifically, the inclination angle β of the first window lens 230 relative to the light output axis of the reflecting mirror 210 may be 2°, 15°, 30°, 45°, or other angles.

As shown in FIG. 3, in some possible embodiments according to the present disclosure, the rotating base 220 includes a base body 223 and an upper cover 224 that are detachably connected. The reflecting mirror 210 is mounted on the base body 223, and the base body 223 is rotatably connected to the fixed base 130, so as to drive the reflecting mirror 210 to rotate relative to the fixed base 130. A first slot 2231 is formed in the base body 223, a second slot 2241 is formed in the upper cover 224, and the upper cover 224 is connected to the base body 223, such that both ends of the first window lens 230 are seated in the first slot 2231 and the second slot 2241, respectively; that is, the first window lens 230 is snap-fitted and clamped between the upper cover 224 and the base body 223 by the upper cover 224 and the base body 223, thereby achieving a connection between the first window lens 230 and the rotating base 220. Compared with the related art in which the first window lens is mounted on the rotating base by an adhesive, the mounting manner of the first window lens 230 eliminates the cost of the adhesive, which is beneficial to reducing the manufacturing cost of the lidar 001, thereby meeting the low-cost design requirement of the lidar 001.

Specifically, the upper cover 224 and the base body 223 may be connected by means of a snap-fit structure, a threaded structure 133, an adhesive, or the like.

As shown in FIGs. 10 and 11, in some possible embodiments according to the present disclosure, the fixed module 100 further includes a light-homogenizing element 150. The light-homogenizing element 150 is located between the receiver 121 and the receiving lens 122.

The arrangement of the light-homogenizing element 150 can improve the echo uniformity at the photosensitive surface of the receiver 121. In this way, the ranging deviation during the operation of the lidar 001 can be reduced, thereby improving the ranging performance of the lidar. In addition, the calibration deviation during production of the lidar 001 can be reduced, thereby improving the production yield of the product.

The light-homogenizing element 150 mainly includes a ground glass, a diffuser plate, a DOE (diffractiveoptical element, diffractiveoptical element), or other optical elements having a light-homogenizing function.

As shown in FIGs. 10 and 11, in some possible embodiments according to the present disclosure, the rotating module 200 further includes an optical filter 240 mounted on the rotating base 220, and the optical filter 240 corresponds to the receiving window 222 and is located between the receiving window 222 and the reflecting mirror 210. That is, each receiving window 222 corresponds to one optical filter 240, and the optical filter 240 can filter out background light from the received light reflected by the obstacles and the surrounding environment, so as to reduce stray light interference and improve the detection accuracy of the lidar 001.

The optical filter 240 is a narrow-band optical filter 240, and a bandwidth specification of the optical filter 240 is less than or equal to 50 nm to ensure a good filtering effect. Specifically, the bandwidth specification of the optical filter 240 may be 10 nm, 30 nm, 40 nm, 50 nm, or other values.

In some possible embodiments according to the present disclosure, the diameter of the receiving lens 122 ranges from 10 mm to 20 mm. Specifically, the diameter of the receiving lens 122 may be 10 mm, 14 mm, 16 mm, 20 mm, or other dimensions.

The diameter of the hollow structure of the receiving lens 122 ranges from 5 mm to 10 mm. Specifically, the diameter of the hollow structure of the receiving lens 122 may be 5 mm, 6 mm, 8 mm, 10 mm, or other dimensions.

The focal length of the receiving lens 122 ranges from 8 mm to 20 mm. Specifically, the focal length of the receiving lens 122 may be 8 mm, 14 mm, 16 mm, 20 mm, or other dimensions.

The ratio of the diameter to the focal length of the receiving lens 122 ranges from 0.8 to 2.2. Specifically, the ratio of the diameter to the focal length of the receiving lens 122 may be 0.8, 1, 1.5, 2, 2.2, or other values.

The diameter of the emission lens 112 ranges from 3 mm to 8 mm. Specifically, the diameter of the emission lens 112 may be 3 mm, 5 mm, 6 mm, 8 mm, or other dimensions.

The focal length of the emission lens 112 ranges from 3 mm to 10 mm. Specifically, the focal length of the emission lens 112 may be 3 mm, 6 mm, 8 mm, 10 mm, or other dimensions.

The material of the receiving lens 122 may be glass, PMMA (polymethyl methacrylate, polymethyl methacrylate), or PC (polycarbonate, polycarbonate).

The material of the emission lens 112 may be glass, PMMA (polymethyl methacrylate, polymethyl methacrylate), or PC (polycarbonate, polycarbonate).

The laser emitter 111 may be an LD (laser diode, semiconductor laser), a VCSEL (vertical cavity surface emitting laser, vertical cavity surface emitting laser), or the like.

The receiver 121 mainly includes a PIN (positive-intrinsic-negative, photodiode), an APD (avalanche photon diode, avalanche diode), a SPAD (single photon avalanche diode, single-photon detector), a SIPM (silicon photomultiplier, silicon photomultiplier), and the like (the SPAD is used in Qiuniu).

The present disclosure has been described with reference to the above embodiments. It should be understood that, however, the above embodiments are only for the purpose of illustration and description and are not intended to limit the present disclosure to the scope of the embodiments described. In addition, those skilled in the art can understand that the present disclosure is not limited to the above embodiments. More variations and modifications can be made according to the teachings of the present disclosure, and these variations and modifications all fall within the protection scope of the present disclosure. The protection scope of the present disclosure is defined by the appended claims and their equivalents.

## Claims

1. A cleaning robot (002), wherein the cleaning robot comprises:
a device main body (021); and
a time-of-flight lidar (001), the time-of-flight lidar (001) being disposed on the device main body (021), the time-of-flight lidar (001) comprising an emission unit (110) and a receiving unit (120), the emission unit (110) comprising a laser emitter (111) and an emission lens (112) disposed in sequence, and the receiving unit (120) comprising a receiver (121) and a receiving lens (122) disposed in sequence,
wherein an optical axis of the emission lens (112) and an optical axis of the receiving lens (122) are coaxially disposed.

2. The cleaning robot (002) according to claim 1, wherein the time-of-flight lidar (001) further comprises:
a reflecting mirror (210), the reflecting mirror (210) being obliquely disposed above the emission lens (112) and the receiving lens (122), and the reflecting mirror (210) being configured to rotate with the optical axis of the emission lens (112) and/or the optical axis of the receiving lens (122) as a rotation axis,
wherein light emitted by the laser emitter (111) passes through the emission lens (112), is redirected by the reflecting mirror (210), and is then projected; and returned received light is redirected by the reflecting mirror (210), passes through the receiving lens (122), and is then received by the receiver (121).

3. The cleaning robot (002) according to claim 2, wherein
an inclination angle of the reflecting mirror (210) relative to a horizontal line is at least 45° and does not exceed 47°.

4. The cleaning robot (002) according to claim 2, wherein the time-of-flight lidar (001) further comprises:
a fixed base (130), the fixed base (130) being connected to the device main body (021), and the emission unit (110) and the receiving unit (120) being mounted on the fixed base (130);
a rotating base (220), the rotating base (220) being rotatably connected above the fixed base (130), and the reflecting mirror (210) being mounted on the rotating base (220); and
a driving part (300) mounted on the fixed base (130) and/or the device main body (021) and connected to the rotating base (220), the driving part (300) being configured to drive the rotating base (220) to rotate relative to the fixed base (130).

5. The cleaning robot (002) according to claim 4, wherein the time-of-flight lidar (001) further comprises:
a main circuit (400), the main circuit (400) being mounted on the fixed base (130), the emission unit (110) further comprising an emission circuit (113) electrically connected to the laser emitter (111), the receiving unit (120) further comprising a receiving circuit electrically connected to the receiver (121), and the main circuit (400) being electrically connected to the emission circuit (113) and the receiving circuit.

6. The cleaning robot (002) according to claim 5, wherein
the laser emitter (111) is horizontally arranged, and the receiver (121) is horizontally arranged; and
the laser emitter (111) is arranged above the emission circuit (113), the receiver (121) is arranged above the receiving circuit, and the main circuit (400) is located below the emission circuit (113) and the receiving circuit.

7. The cleaning robot (002) according to claim 5, wherein the time-of-flight lidar (001) further comprises:
a rotating member (500), the rotating base (220) and the fixed base (130) defining a mounting chamber in an enclosing manner, the fixed base (130) being provided with an annular mounting groove (131) located within the mounting chamber, the emission unit (110) and the receiving unit (120) being mounted inside the mounting groove (131), and the rotating member (500) being sleeved on an outer side of the mounting groove (131) and connected to the rotating base (220); and
a locking member (600), the locking member (600) being sleeved on the outer side of the mounting groove (131) and located above the rotating member (500), the emission unit (110) further comprising a mounting barrel (140), and the locking member (600) being connected to an outer wall of the mounting groove (131) to lock the rotating member (500) on the mounting barrel (140).

8. The cleaning robot (002) according to claim 7, wherein
the outer wall of the mounting groove (131) is provided with a first step (132), and an outer wall of an end part, facing the rotating base (220), of the mounting groove (131) is provided with a threaded structure (133); and
the locking member (600) is a locking nut, the rotating member (500) overlaps the first step (132), the rotating member (500) comprises an inner ring and an outer ring, the locking nut engages with the threaded structure (133) to clamp the inner ring between the locking nut and the first step (132), and the outer ring is connected to the rotating base (220).

9. The cleaning robot (002) according to claim 7, wherein
an inner wall of the mounting groove (131) is in communication with inside and outside of the mounting chamber, the main circuit (400) of the time-of-flight lidar (001) is mounted at a bottom of the fixed base (130) and located outside the mounting chamber, and the main circuit (400) is electrically connected to the emission circuit (113) and the receiving circuit through the mounting groove (131).

10. The cleaning robot (002) according to claim 1, wherein
the receiver (121) is located below the laser emitter (111), the receiving lens (122) is located below the emission lens (112), and in a plane perpendicular to the optical axis of the emission lens (112) and/or the optical axis of the receiving lens (122), a projection of the receiving lens (122) is located on an outer peripheral side of a projection of the emission lens (112),
wherein the receiver (121) is a single-photon receiver (121).

11. The cleaning robot (002) according to claim 1, wherein
the emission unit (110) further comprises a mounting barrel (140), the laser emitter (111) and the emission lens (112) are mounted at two ends inside the mounting barrel (140), respectively, the mounting barrel (140) is inserted through the receiving lens (122) and connected to the mounting barrel (140), and the receiver (121) is located below the mounting barrel (140).

12. A cleaning system, wherein the cleaning system comprises: a cleaning docking station and the cleaning robot (002) according to any one of claims 1 to 11.
